Europäisches Patentamt

European Patent Office

Office européen des brevets

(19)

(11) Publication number: **0 129 363**
**B1**

(12) **EUROPEAN PATENT SPECIFICATION**

(45) Date of publication of patent specification: **14.09.88**

(21) Application number: **84303762.3**

(22) Date of filing: **05.06.84**

(51) Int. Cl.⁴: **F 16 F 13/00,** B 62 D 33/06,
F 16 F 9/32

(54) Spring.

(30) Priority: **16.06.83 GB 8316419**

(43) Date of publication of application:
**27.12.84 Bulletin 84/52**

(45) Publication of the grant of the patent:
**14.09.88 Bulletin 88/37**

(84) Designated Contracting States:
**BE DE FR IT NL SE**

(56) References cited:
**DE-A-2 717 825
DE-A-2 730 046
FR-A- 932 616
FR-A-2 220 717
FR-A-2 255 508
GB-A- 610 958
GB-A- 613 253
GB-A-2 027 517
GB-A-2 087 511
US-A-2 387 066
US-A-2 471 096
US-A-3 076 643
PATENTS ABSTRACTS OF JAPAN, vol. 8, no.
146 (M-307)1583r, 7th July 1984; & JP - A - 59
43 241 (NISSAN JIDOSHA K.K.) 10-03-1984**

(73) Proprietor: **DUNLOP LIMITED
Dunlop House Ryder Street St. James's
London SW1Y 6PX (GB)**

(72) Inventor: **Randell, William Francis
56 Hextall Road
Leicester (GB)**

(74) Representative: **Moore, John Hamilton et al
Dunlop Limited Group Patent Department P.O.
Box 504
Erdington Birmingham B24 9QH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a spring and in particular, though not exclusively, to a spring of a kind suitable for use in mounting a tiltable vehicle cab structure on a vehicle chassis.

When a vehicle cab is tilted the usually vertically mounted springs experience high sideways loads. If the springs are each of a kind comprising a hollow body having an opening in which is mounted an elastomeric bush through which a plunger may slide, such as a spring of the kind described in UK Patent Publication GB 1447001, these sideways loads can damage the spring.

The present invention is directed to providing a spring of the kind comprising a hollow body having an opening in which is mounted an elastomeric bush through which a plunger member may slide and which can withstand sideways load without damage and without adversely affecting the characteristics of the spring during normal use, i.e. use in a vertical orientation which avoids any sigificant sideways loads. The invention provides that a sealed cavity defined by the hollow body, bush and plunger member for containing a substantially incompressible fluid shall contain a resilient bush which provides a progressively increasing resistance to movement of the plunger member in a direction substantially perpendicular to the longitudinal axis of the spring. The resilient bush is required to be secured relative to the hollow body and adapted for sliding movement relative to the plunger member in the direction of the longitudinal axis of the spring.

The resilient bush within said cavity may be of a kind which provides a non-linear resistance to movement of the plunger member in a sideways direction, i.e. a direction perpendicular to the longitudinal axis of the spring. It may permit substantially unrestricted initial movement of the plunger member from a rest position of the plunger member when in the absence of externally applied load and provide progressively increasing resistance to further sideways movement of the plunger member. In an alternative arrangement the resilient bush may provide progressively increasing resistance even to initial movement of the plunger member in a sideways direction.

The elastomeric bush in which the plunger member is slidingly received preferably provides a resistance to movement of the plunger in a sideways direction so as to assist, in conjunction with the resilient bush in the cavity, in providing, in use of the spring, location of the plunger member substantially in alignment with the longitudinal axis of the spring when in an unloaded condition.

Preferably the spring is provided with means for pressurising or supplying pressurised fluid to the cavity. In consequence the length of the spring when subject to a given longitudinal load may be adjusted as required.

The invention will now be described in more detail, by way of example only, with reference to the accompanying drawings wherein:—

Figures 1 and 2 are schematic representations of a spring according to the present invention to illustrate the principle of operation thereof and

Figure 3 is a vertical section through a spring according to the present invention in the mean laden condition.

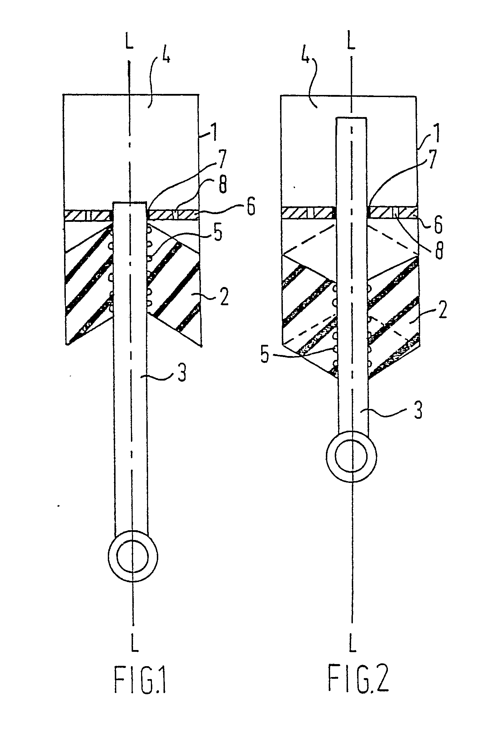

Referring first to Figures 1 and 2 there is shown a schematic representation of the spring according to the present invention. The spring comprises a hollow body 1, a rubber bush 2 and a plunger member 3.

In use the body 1 is connected to one of two components and the plunger member 3 is connected to the other of said two components.

The body 1 is shown in the form of a cylinder closed at one end and having the bush 2 mounted at the other end. The bush 2 is of chevron shape in cross-section having the apex end directed towards the inside of the hollow body in the unloaded condition.

The plunger member 3 is shown in the form of a solid cylindrical rod slidingly and rotatably received in a central through bore of the bush 2 for reciprocating movement in a direction substantially parallel to the longitudinal axis L of the spring.

The body 1, bush 2 and plunger 3 define a sealed cavity 4 which contains a substantially incompressible fluid inert with respect to the rubber of bush 2. The bore of the bush 2 is formed with a plurality of axially spaced annular grooves 5 which contain cavity fluid to lubricate the plunger 3 thereby minimising the friction and wear of the bush 2. The axial spacing of the grooves 5 increases towards the outer end of the bush 2 which has the effect of pumping the cavity fluid inwards during reciprocating movement of the plunger 3 thereby providing a seal between the plunger 3 and bush 2 to prevent loss of cavity fluid.

Provided within the cavity 4 is a support bush 6 of elastomeric material. The bush is secured by bonding to the internal surface of the body 1 and is provided centrally with a metal sleeve 7 through which the plunger 3 may slide freely. The bush 6 additionally is provided with six circumferentially uniformly spaced passages 8 through which the cavity fluid may flow in a substantially unrestricted manner.

Operation of the spring is as follows, starting from the unloaded condition shown in Figure 1. Compression loads applied in the direction of the longitudinal axis L force the plunger 3 into the cavity 4 and the fluid contained therein, being incompressible and unable to escape, exerts a pressure on the bush 2 causing axial, i.e. shear, deflection of the bush 2 up to the fully compressed position of the spring shown in Figure 2 in which the bush is inverted with respect to its starting position. The passages 8 enable cavity fluid to flow in a direction towards the bush 2 without requiring substantial deformation of the support bush as the plunger moves through the support bush 6 under the action of a compression load. The compression stiffness of the spring is dependent upon the ratio of the inner and outer diameters of the bush and its axial stiffness and any one or more of these parameters may be varied in known manner to provide the required spring characteristics for a given application. In addition the fluid in the cavity 4 may be either unpressurised or pressurised in the unloaded condition, the use of a pressurised fluid providing a recoil force at the zero deflection which may be advantageous for certain spring applications.

Any load tending to move the plunger 3 sideways, or subject it to conical motion, is resisted by the compression resistant elastomeric material of the axially spaced bushes 2, 6.

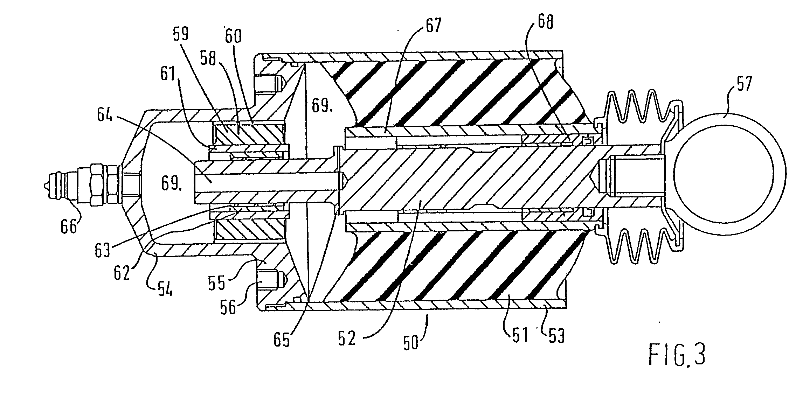

In another embodiment illustrated with reference to Figure 3 a spring, suitable for use as a vehicle cab mounting comprises a hollow body 50, bush 51 and plunger member 52.

The body 50 comprises a first cylindrical tube 53 and coaxial therewith a second cast steel tube 54 of smaller internal diameter than tube 53 and formed integrally with an outwardly extending flange 55 by means of which the two tubes are secured together. The flange 55 is formed with threaded holes 56 for attachment of the spring to the chassis of a vehicle. The plunger 52 is provided with an eyelet fitting 57 for attachment of a cab structure thereto.

The second tube 54 is closed at one end by a plug 66 through which substantially incompressible fluid may be introduced to the tube 54. The other end of the tube 54 has a support bush 58 mounted therein, said bush comprising a cylindrical shaped elastomeric element 59 secured between and bonded to inner and outer cylindrical shaped metal members 60, 61.

The outer member 60 is a friction fit in the tube 54. Provided within the inner member 61 is a friction fitted assembly of a support sleeve 62 and a low friction bearing 63, the sleeve 62 being arranged to be between the bearing 63 and inner member 61. The end portion of plunger 52 is able thereby to slide freely relative to the inner member 61 of support bush 58.

An end portion of the plunger 52 is formed with an axially extending bore 64 and at a portion of the plunger which does not extend into the cylindrical tube 54 there is provided one or more radially extending passage 65 each leading outwards from said bore 64 for restricted flow of fluid therethrough.

Provided in the first cylindrical tube 53 is the annular non-interleaved rubber bush 51. The bush 51 has an inner tubular metal member 67 in which the plunger member is slidingly received. The two tubes 53, 54 of the body 50, the bush 51 and plunger member 52 define a cavity 69 within which incompressible fluid, admitted through the plug 66, is contained. Associated with the member 67 is seal means 68 to prevent escape of pressurised fluid from the cavity 69.

When the spring is subject to a compression force fluid is caused to flow through the bore 64 and passage 65 from that part of the cavity within tube 54 to that part in tube 53 such that an equal pressure exists in each part. The resultant pressure deforms the bush 51 and further deformation of the bush ceases when the force acting on the bush due to the fluid pressure associated with particular position of the bush balances the resistance to longitudinal deformation of the bush 51.

A spring of a kind in accordance with the present invention is particularly suitable for use in mounting of a tiltable vehicle cab structure on a vehicle chasis. When a cab is tilted the usually vertically mounted springs experience a high sideways load and the provision of support means in the fluid cavity of each spring ensures that these loads can be withstood without damage and without adversely affecting the suspension characteristics of the cab during normal use of the vehicle.

It will be understood the spring according to the present invention has applications other than those for use as a cab mounting, for example the spring may be used in such applications as an automotive impact absorber and a railway buffer.

**Claims**

1. A spring for connecting two components comprising a hollow body (1, 50) adapted for connection to one of said components, an elastomeric bush (2, 51) mounted in an opening in the hollow body and having a through bore in which a plunger member (3, 52) adapted for connection to the other of said components is slidingly received for reciprocating movement in a direction substantially parallel to the longitudinal axis of the spring, said hollow body (1, 50) bush (2, 51) and plunger member (3, 52) defining a sealed cavity (4, 69) for containing a substantially incompressible fluid, characterised in that there is provided within said cavity (4, 69) a resilient bush (6, 58) which provides a progressively increasing resistance to movement of the plunger member (3, 52) in a direction substantially perpendicular to the longitudinal axis of the spring, the resilient bush (6, 58) being secured relative to the hollow body (1, 50) and adapted for sliding movement relative to the plunger member (3, 52) in the direction of the longitudinal axis of the spring.

2. A spring according to Claim 1 characterised in that said resilient bush (6, 58) provides a non-linear variation of resistance to movement of the plunger member (3, 52) in a direction perpendicular to the longitudinal axis of the spring.

3. A spring according to any one of the preceding claims characterised in that the resilient bush (6, 58) is positioned in a portion of the hollow body (1, 50) of smaller cross-sectional shape than a portion of the hollow body in which the elastomeric bush (2, 51) is mounted.

4. A spring according to any one of the preceding claims characterised in that there is provided in said cavity (4, 69) a substantially incompressible fluid which is at above atmospheric pressure in the absence of externally applied load to the hollow body (1, 50) and plunger member (3, 52).

5. A spring according to Claim 4 characterised in that said pressure is selectively variable.

6. A spring according to any one of the preceding claims characterised in that fluid flow means (8, 64) is provided to allow cavity fluid to flow axially from one side of the resilient bush (6, 58) to the other side of the resilient bush during relative movement of the two components.

7. A spring according to any one of the preceding claims characterised in that damping means (65) is provided within the hollow body (50) for damping movement of the plunger member (3, 52) relative to the hollow body (1, 50).

8. A spring according to Claim 6 or Claim 7 characterised in that said fluid flow means allows cavity fluid to flow in a substantially unrestricted manner from one side of the resilient bush to the other side of the resilient bush during relative movement of the two components.

9. A spring according to any one of the preceding claims characterised in that the elastomeric bush comprises a plurality of interleaved rubber layers and metal plates arranged generally concentrically relative to a central bore in the elastomeric bush.

10. A spring according to any one of the preceding claims characterised in that the elastomeric bush (6, 58) is subject to shear deformation during relative sliding movement of the plunger member and hollow body.

11. A spring according to any one of the preceding claims characterised in that the bore of the elastomeric bush (2) is shaped to provide a plurality of axially spaced annular grooves (5) for containing fluid to lubricate the plunger (3).

12. A spring according to Claim 11 characterised in that the axial spacing of the grooves (5) increases towards an outer end of the bush (2).

**Patentansprüche**

1. Feder zum Verbinden von zwei Bauteilen mit einem Hohlkörper (1, 50), der mit einem der Bauteile verbunden werden kann, einer elastomeren Buchse (2, 51), die in einer Öffnung im Hohlkörper angebracht ist und eine durchgehende Bohrung aufweist, in der ein mit dem anderen Bauteil verbindbares Kolbenelement (3, 52) gleitend verschiebbar zur Ausführung einer hin- und hergehenden Bewegung in einer Richtung im wesentlichen parallel zur Längsachse der Feder aufgenommen ist, wobei der Hohlkörper (1, 50), die Buchse (2, 51) und das Kolbenelement (3, 52) einen dichten Hohlraum (4, 69) zum Aufnehmen eines in wesentlichen inkompressiblen Fluides begrenzen, dadurch gekennzeichnet, daß im Hohlraum (4, 69) eine elastische Buchse (6, 58) vorgesehen ist, die einen fortschreitend zunehmenden Widerstand der Bewegung des Kolbenelementes (3, 52) in eine Richtung im wesentlichen senkrecht zur Längsachse der Feder entgegensetzt, wobei die elastische Buchse (6, 58) relativ zum Hohlkörper fest angebracht ist und eine Gleitbewegung relativ zum Kolbenelement (3, 52) in Richtung der Längsachse der Feder ausführen kann.

2. Feder nach Anspruch 1, dadurch gekennzeichnet, daß die elastische Buchse (6, 58) eine nicht lineare Änderung des Widerstandes gegenüber der Bewegung des Kolbenelementes (3, 52) in eine Richtung senkrecht zur Längsachse der Feder zeigt.

3. Feder nach einem der vorhergehenden Ansprüche, dadurch gekennzeichnet, daß die elastische Buchse (6, 58) in einem Teil des Hohlkörpers (1, 50) angeordnet ist, der einen kleineren Querschnitts als der Teil des Hohlkörpers hat, in dem die elastomere Buchse (2, 51) angebracht ist.

4. Feder nach einem der vorhergehenden Ansprüche, dadurch gekennzeichnet, daß im Hohlraum (4, 69) ein im wesentlichen inkompressibles Fluid vorgesehen ist, das über dem Außenluftdruck beim Fehlen einer von außen anliegenden Last am Hohlkörper (1, 50) und am Kolbenelement (3, 52) liegt.

5. Feder nach Anspruch 4, dadurch gekennzeichnet, daß der Druck wahlweise variabel ist.

6. Feder nach einem der vorhergehenden Ansprüche, dadurch gekennzeichnet, daß eine Fluidströmungseinrichtung (8, 64) vorgesehen ist, um es dem Hohlraumfluid zu ermöglichen, während der Relativbewegung der beiden Bauteile axial von einer Seite der elastischen Buchse (6, 58) zur anderen Seite der elastischen Buchse zu strömen.

7. Feder nach einem der vorhergehenden Ansprüche, dadurch gekennzeichnet, daß eine Dämpfungseinrichtung (65) im Hohlkörper (50) vorgesehen ist, um die Bewegung des Kolbenelementes (3, 52) relativ zum Hohlkörper (1, 50) zu dämpfen.

8. Feder nach Anspruch 6 oder Anspruch 7, dadurch gekennzeichnet, daß die Fluidströmungseinrichtung es dem Hohlraumfluid erlaubt, während der Relativbewegung der beiden Bauteile in im wesentlichen unbeschränkter Weise von einer Seite der elastischen Buchse zur anderen Seite der elastischen Buchse zu strömen.

9. Feder nach einem der vorhergehenden Ansprüche, dadurch gekennzeichnet, daß die elastomere Buchse eine Vielzahl von ineinandergeschtelten Gummischichten und Metallplatten umfaßt, die im wesentlichen konzentrisch relativ zu einer mittleren Bohrung in der elastomeren Buchse angeordnet sind.

10. Feder nach einem der vorhergehenden Ansprüche, dadurch gekennzeichnet, daß die elastomer Buchse (6, 58) einer Scherverformung während der relativen Gleitbewegung des Kolbenelementes und des Hohlkörpers ausgesetzt ist.

11. Feder nach einem der vorhergehenden Ansprüche, dadurch gekennzeichnet, daß die Bohrung der elastomeren Buchse (2) so geformt ist, daß sie eine Vielzahl von axial beabstandeten Ringnuten (5) zur Aufnahme eines Fluides zum Schmieren des Kolbens (3) liefert.

12. Feder nach Anspruch 11, dadurch gekennzeichnet, daß der axial Abstand der Nuten (5) zum äußeren Ende der Buchse (2) hin zunimmt.

## Revendications

1. Un ressort pour relier deux composants comprenant un corps creux (1, 50) adapté pour être relié à un desdits composants, un manchon (2, 51) en matière élastomère monté dans une ouverture du corps creux et comportant un trou traversant dans lequel un élément formant plongeur (3, 52), adapté pour être relié à l'autre composant, est reçu de façon coulissante pour se déplacer alternativement dans une direction sensiblement parallèle à l'axe longitudinal du ressort, ledit corps creux (1, 50), ledit manchon (2, 51) et ledit élément formant plongeur (3, 52) définissant une cavité scellée (4, 69) destinée à contenir un fluide sensiblement incompressible, caractérisé en ce qu'il est prévu à l'intérieur de ladite cavité (4, 69) un manchon élastique (6, 58) qui oppose une résistance progressivement croissante à un mouvement de l'élément formant plongeur (3, 52) dans une direction sensiblement perpendiculaire à l'axe longitudinal du ressort, le manchon élastique (6, 58) étant fixé par rapport au corps creux (1, 50) et étant adapté pour effectuer un mouvement de glissement par rapport à l'élément formant plongeur (3, 52) dans la direction de l'axe longitudinal du ressort.

2. Un ressort selon la revendication 1, caractérisé en ce que ledit manchon élastique (6, 58) produit une variation non linéaire de résistance s'opposant à un mouvement de l'élément forman plongeur (3, 52) dans une direction perpendiculaire à l'axe longitudinal du ressort.

3. Un ressort selon une quelconque des revendications précédentes, caractérisé en ce que le manchon élastique (6, 58) est positionné dans une partie du corps creux (1, 50) ayant une forme de plus petite section qu'une partie du corps creux dans laquelle le manchon en matière élastomère (2, 51) est monté.

4. Un ressort selon une quelconque des revendications précédentes, caractérisé en ce qu'il est prévu dans ladite cavité (4, 69) un fluide sensiblement incompressible qui se trouve à une pression supérieure à la pression atmosphérique en l'absence d'une charge appliquée de l'extérieur au corps creux (1, 50) et à l'élément formant plongeur (3, 52).

5. Un ressort selon la revendication 4, caractérisé en ce que ladite pression est sélectivement variable.

6. Un ressort selon une quelconque des revendications précédentes, caractérisé en ce qu'un moyen d'écoulement de fluide (8, 64) est prévu pour permettre à du fluide de la cavité de s'écouler axialement depuis un côté du manchon élastique (6, 58) jusqu'à l'autre côté du manchon élastique pendant un mouvement relatif des deux composants.

7. Un ressort selon une quelconque des revendications précédentes, caractérisé en ce qu'il est prévu à l'intérieur du corps creux (50) un moyen d'amortissement (65) pour amortir un mouvement de l'élément formant plongeur (3, 52) par rapport au corps creux (1, 50).

8. Un ressort selon la revendication 6 ou la revendication 7, caractérisé en ce que ledit moyen d'écoulement de fluide permet à du fluide de la cavité de s'écouler d'une manière sensiblement non entravée depuis un côté du manchon élastique jusqu'à l'autre côté du manchon élastique pendant un mouvement relatif des deux composants.

9. Un ressort selon une quelconque des revendications précédentes, caractérisé en ce que le manchon en matière élastomère comprend une pluralité de plaques métalliques et de couches de caoutchouc imbriquées qui sont disposées dans l'ensemble concentriquement par rapport à un trou central du manchon en matière élastomère.

10. Un ressort selon une quelconque des revendications précédentes, caractérisé en ce que le manchon en matière élastomère (6, 58) est soumis à une déformation par cisaillement pendant un mouvement de glissement relatif de l'élément formant plongeur et du corps creux.

11. Un ressort selon une quelconque des revendications précédentes, caractérisé en ce que le trou du manchon en matière élastomère (2) est profilé de façon à former une pluralité de rainures annulaires (5), axialement espacées, pour contenir du fluide de lubrification du plongeur (3).

12. Un ressort selon la revendication 11, caractérisé en ce que l'espacement axial des rainures (5) augmente en direction d'une extrémité extérieure du manchon (2).

FIG.1            FIG.2

FIG.3